# EUROPEAN PATENT SPECIFICATION

(11) **EP 3 419 119 B1**
(45) Date of publication and mention of the grant of the patent: **26.08.2020**
(21) Application number: 18179135.1
(22) Date of filing: 21.06.2018
(51) Int. Cl.: H01R 11/28, H01R 13/44, H01R 13/447, H01R 13/621

(54) **MODULE CONNECTOR**
MODULVERBINDER
CONNECTEUR DE MODULE

(30) Priority: 21.06.2017 DE 102017210425; 10.01.2018 DE 202018100111 U
(43) Date of publication of application: 26.12.2018
(73) Proprietor: TE Connectivity Germany GmbH, 64625 Bensheim (DE)
(72) Inventor: KAEHNY, Frank, 64686 Lautertal (DE); LISTING, Martin, 63225 Langen (DE); GRZYWOK, Wilhelm, 81825 Munich (DE)
(74) Representative: Grünecker Patent- und Rechtsanwälte PartG mbB

(56) References cited:
- EP-A2- 3 136 511
- DE-A1-102014 203 128
- DE-A1-102016 206 378
- US-A1- 2011 053 404

## Description

The invention relates to a module connector, in particular for batteries of vehicles with an electric drive.

Such module connectors are employed, for example, in order to connect the different modules which form a battery. In such modules, high voltages and currents occur which are dangerous for a user, for example a mechanic in a workshop.

A solution with which the user is prevented from touching current-carrying components of the module connector is provided by a module connector with two connection parts which can be connected to one another in an electrically conductive manner and to each of which a conductor element can be attached at a conductor point, and which each have a mutually compatible affixing element, wherein each connection part, at its connection side oriented towards the respective other connection part, is provided with a touch protection having an outer, electrically insulated collar and an electrically insulated protection pin which is surrounded by the collar, wherein a current bridge which electrically connects the two conductor points and which the collar and protection pin project beyond is located at at least one connection part between the collar and protection pin.

By means of this solution, the current can be transmitted by the current bridge, wherein the user is prevented from touching the collar and the protection pin.

DE 10 2014 203 128 A1 shows a connection device comprising two parts that are connected to each other by a bolt and a nut. US 2011/0053404 A1 shows a high wattage connection with finger protection comprising a tube and a cap on a pin. DE 10 2016 206 378 A1 shows a connection device with an elastic sleeve.

It is an object of the invention to provide a solution that simplifies the configuration of the module connector.

This is achieved when the protection pins are formed by the peaks of the affixing elements.

The solution according to the invention can be further improved with the following configurations and further developments which are independent of one another and each advantageous per se.

In particular, a finger of the user can be prevented from touching the current-carrying components, which is simulated, for example, by a test finger according to the normal standards, for example according to DIN EN 60529:2000, which specifies a length of 80 mm and a diameter of 12 mm for the test finger. Further relevant standards can be: VDE 0470 Part 2, IEC/EN 61032, VDE 0470 Part 1 or IEC/EN 60529, IEC/EN 60950, IEC 61010, IEC/EN 60335, IEC/EN 60745-1, IEC/EN 60034-5 and IEC/EN 60065.

In order to achieve a particularly good protection, the protection pin can project beyond the collar.

In an advantageous configuration, the current bridge can be configured as a contact sleeve. As a result, a good current transmission is possible.

In order to achieve a good touch protection, each connection part can have its own contact sleeve. The contact pin and the collar can further project beyond such a contact sleeve, such that an ingress of a finger is effectively prevented.

The protection pins are formed by the peaks of the affixing elements. Here, the affixing elements have a dual function and the number of parts is therefore limited.

For a secure and space-saving affixing to one another, one protection pin can have a central receptacle for the other protection pin.

In order to achieve the electrical insulation, a protection pin can have an electrically insulating cap at the connection side.

In one configuration which is particularly simple to produce, the collar and/or the current bridge can be rotationally symmetrical. When assembling these elements, the correct rotational position does not have to be taken into account.

In order to achieve a particularly compact configuration, the affixing elements can be arranged at least partially inside the current bridge.

Advantageously, the affixing elements can be connectable to one another via a screw connection. This can be an external thread and an internal thread, for instance a screw and a nut or a threaded sleeve. Such connections can produce particularly high forces.

In order to prevent the loss of an affixing element, an affixing element can be configured as a screw and a flange can protrude laterally from a head of the screw, said flange being retained by a stop at the connection part.

The connection parts can have a coding which enables the connection only in specific angular positions with respect to a rotation about a connection direction. As a result, an assembly at an incorrect angle can be prevented.

In an alternative configuration, codings can be present, in order to prevent the connection of unsuitable combinations, for example with respect to current-carrying capacity or materials.

For a particularly flexible attachment, at least one connection part can comprise a conductor braid with a compacted end.

Advantageously, the connection parts and the current bridge are of low resistance, in order to achieve a good transmission. They can consist of a softer material, such as copper, or comprise this.

The affixing elements can be made from a poorly conductive but mechanically strong material, such as steel. They can be coated, for example to achieve protection against corrosion.

In order to achieve an optimal protection, the collar can run around the connection direction in a closed manner. It can therefore be complete and without interruptions along a circumferential direction.

At a connection part, a cavity or receptacle can be present between the current bridge and the collar, in order to receive the collar of the other connection part. This enables a particularly low arrangement of the current bridges inside the connection parts and thus greater security against contact.

At a connection part, a cavity or receptacle can be present between the protection pin and the current bridge, in order to receive the affixing element of the other connection part. This enables affixing along a long distance in the connection direction, such that secure affixing is possible.

Advantageously, at least one affixing element can be arranged centrally in the connection part and the module connector. Further elements like the current bridge and/or the collar can run around the affixing element. The affixing element can then provide for an even force distribution in the other elements. The affixing element can effect a centering of the connection part or the connection parts. In particular, this can occur automatically during the affixing with the affixing element.

In an advantageous embodiment, the further elements are arranged symmetrically, in particular rotationally symmetrically around the affixing element. By this, an even and symmetric force distribution can be achieved.

Hereinafter, the invention is explained in greater detail by way of example using advantageous configurations with reference to the drawings. The advantageous further developments and configurations illustrated here are each independent of one another and can be freely combined with one another, depending on how this is necessary in the application.

In the drawings:
- Fig. 1: shows a schematic perspective view of a first embodiment in an open state;
- Fig. 2: shows a schematic perspective view of the first embodiment in a connected state;
- Fig. 3: shows a schematic, partially sectioned view of the first embodiment from Fig. 1;
- Fig. 4: shows a schematic, partly sectioned view of the embodiment from Fig. 2;
- Fig. 5: shows a detail view from Fig. 4;
- Fig. 6: shows a schematic perspective view of the second connection part of the first embodiment together with a test finger at a first location;
- Fig. 7: shows a schematic perspective view of the second connection part of the first embodiment together with a test finger at a second location;
- Fig. 8: shows a schematic perspective view of the first connection part of the first embodiment together with a test finger;
- Fig. 9: shows a schematic, partially sectioned perspective view of a second embodiment;
- Fig. 10: shows a schematic exploded depiction of the second embodiment;
- Fig. 11: shows a schematic perspective view of the second embodiment; and
- Fig. 12: shows a schematic perspective view of the second embodiment on a battery.

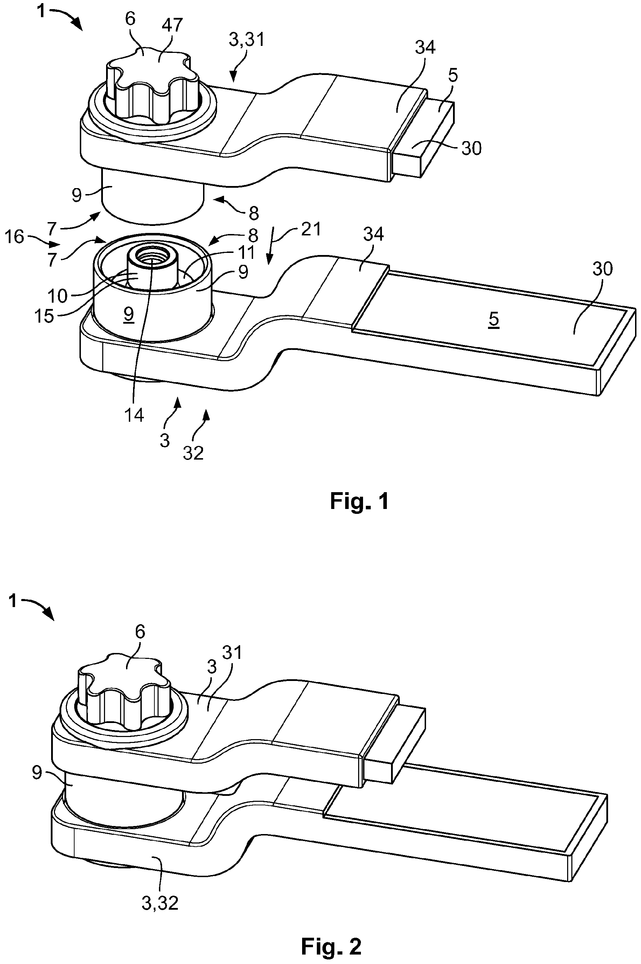

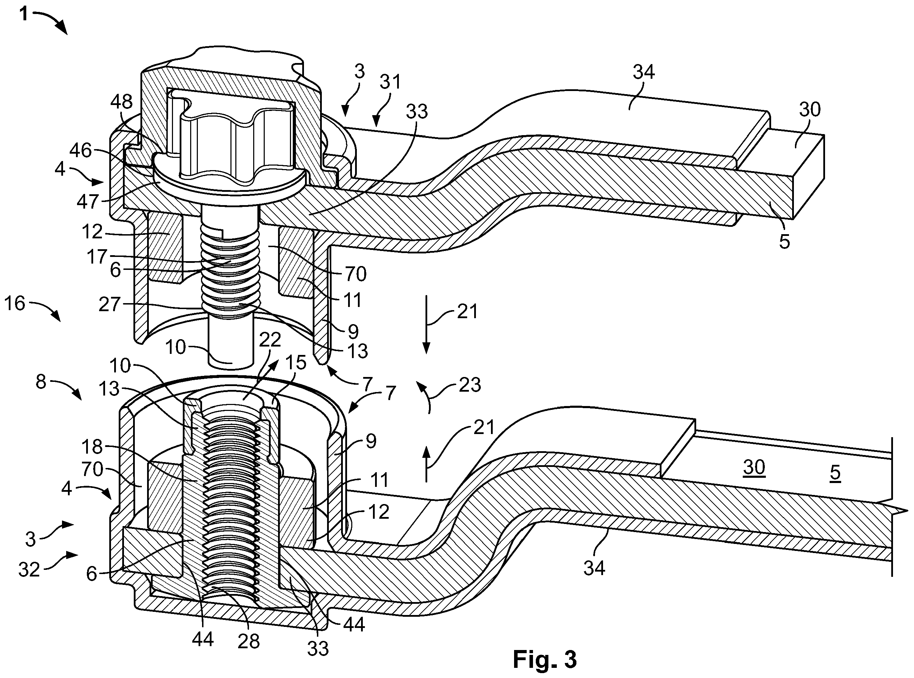

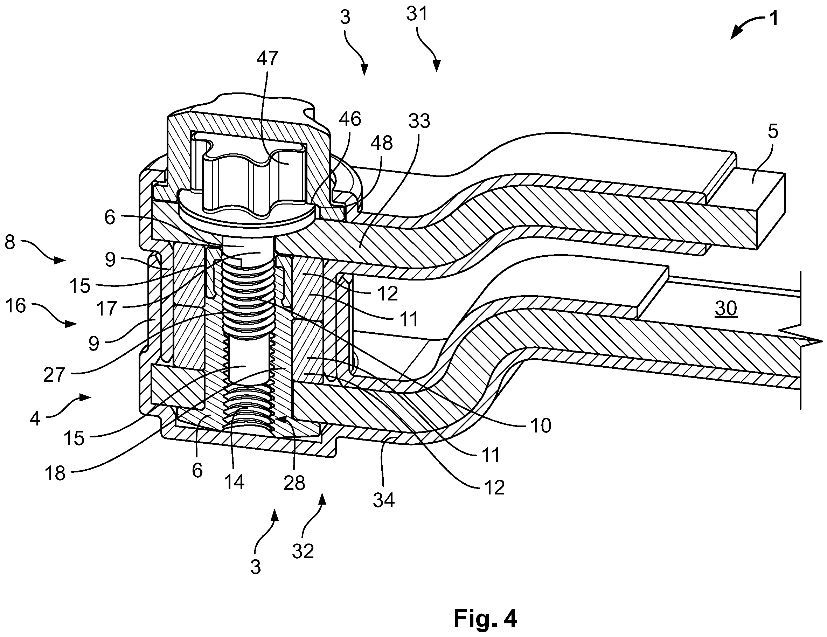

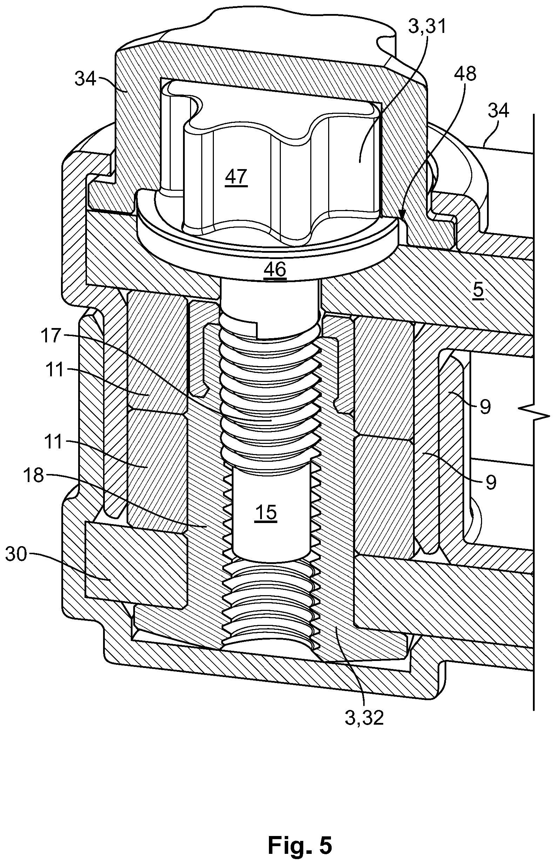

In Figures 1 and 2, a first embodiment of a module connector 1 is shown in an open and connected state, respectively. In Figures 3 and 4, partially sectioned views of the states from Figures 1 and 2 can be seen. A detail view of the connected state from Fig. 4 can be seen in Fig. 5.

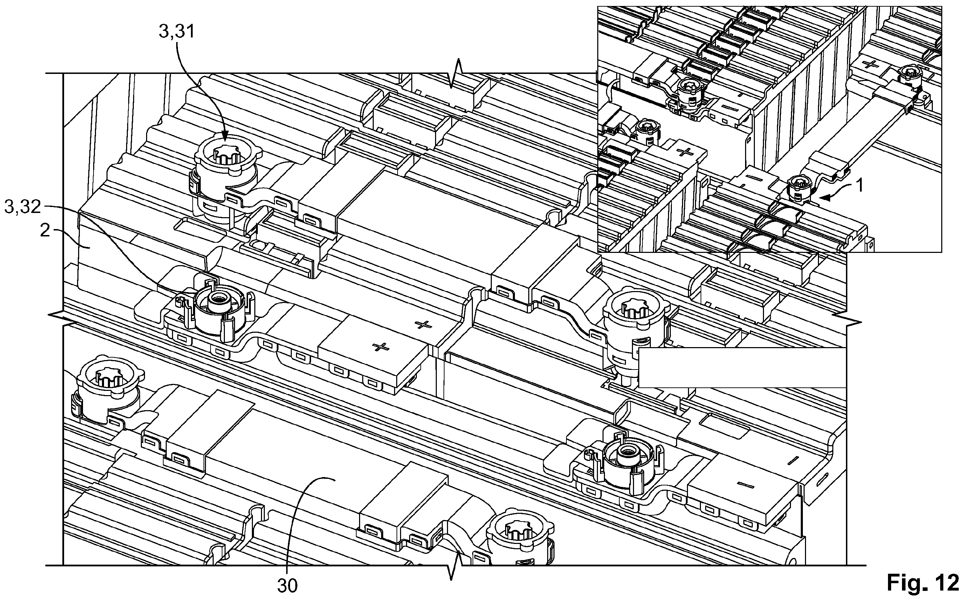

As can be seen in Fig. 12, for example, such a module connector 1 is used to connect the modules in a battery 2 and thus to produce higher currents or voltages, for example. In order to prevent the user who is handling such a module connector from being put at risk, each of the connection parts 3 has a touch protection 8.

The touch protection 8 comprises an external, electrically insulated collar 9 and an electrically insulated protection pin 10 which is surrounded by the collar 9. In each case, a current bridge 11 is located between the collar 9 and the protection pin 10, which current bridge 11 serves to connect two conductor points 4 at the connection parts 3. The collar 9 and the protection pin 10 in each case project beyond the current bridge 11, such that it is inaccessible to the user. The user cannot reach the current bridge 11 with a finger, for example, since the collar 9 and the protection pin 10 are in the way.

The module connector 1 is connected by connecting a first connection part 3, 31 to a second connection part 3, 32 along a connection direction 21. As a result, a first conductor element 5 which is attached to the first connection part 3, 31 is electrically connected via the current bridges 11 to a second conductor element 5, which is attached to the second connection part 3, 32. The current bridge 11 at the second connection part 3, 32 is spaced apart from the collar 9 of the second connection part 3, 32 by a receptacle 70, such that the collar 9 of the first connection part 3, 31 can be inserted between the two.

In order to affix the two connection parts 3, 31, 32 to one another, the connection parts 3, 31, 32 each have an affixing element 6, the affixing elements 6 being configured complementary to one another. At the first connection part 3, 31, the affixing element 6 is formed by a screw 17, at the second connection part 3, 32, the affixing element 6 is formed by a nut 18 or a threaded sleeve. The screw 17 and nut 18 each engage behind the conductor element 5, such that a form-fitting connection is established by the affixing of the two to one another.

Between the current bridge 11 and the protection pin 10 of the first connection part 3, 31, there is a recess or receptacle 70, into which the affixing element 6 of the second connection part 3, 32 is inserted.

The peaks 13 of the affixing elements 6 form the protection pins 10. The construction is kept simple by this dual function.

In order to keep the construction compact, the nut 18 which forms one protection pin 10 has a central receptacle 14 for the other protection pin 10 in the shape of the screw 70.

In order to achieve an electrical insulation, the protection pins 10 each have an electrically insulating cap 15 at the connection side 7. The cap 15 on the nut 18 has an opening which enables the screw 17 to access the receptacle 14, but at the same time is so small that the ingress of a finger is not possible.

In order to achieve a good insulation and at the same time make the affixing secure, the protection pins 10 each transmit the collar 9 in the connection direction 21.

The current bridges 11 are each configured as contact sleeves 12 which surround the protection pin 10. As a result, they cannot go missing.

The current bridges 11, the collars 9 and the protection pins 10 are each configured in a rotationally symmetrical manner, such that the two connection parts 3 can be affixed to one another at any rotation angle along a circumferential direction 23 which runs around the connection direction 21.

In order to achieve a compact configuration, the affixing elements 6 are arranged at least partially inside the current bridge 11.

The affixing elements 6 can be connected to one another via a screw connection 16. For this purpose, an internal thread 28 is present in the nut 18 and an external thread 27 is present in the screw 17.

In order to retain the screw 17, a flange 46 is present on its head 47, which flange 46 protrudes laterally and which is retained by a stop 48 at the connection part 3, 31.

The fixing elements 6 are each located centrally in their connection part 3, 31, 32. They are surrounded by the current bridge 11, and in one case by the collar 9. By this, they provide for an automatic centering of the connection parts 3, 31, 32 with an even and equal force distribution.

In order to achieve a good flexibility, the two conductor elements 5 are each formed as conductor braids 30. In order to enable a secure attachment, the end 33 which is arranged in the connection part 3 is compacted. In order to achieve a stable shape, the individual wires of the braid can be welded, soldered or glued to one another, for example.

In order to also ensure sufficient protection from touching outside the direct connection region, the connection parts 3, 31, 32 have insulations 34 which prevent access. In order to achieve sufficient protection, the insulation 34 can be partially integral with parts of the touch protection 8, in particular the collar 9.

The module connector 1 is particularly suitable for connecting conductor elements 5 to one another which indeed have a good current conductivity, i.e. a low resistance, but are not particularly mechanically stable. This can be the case, for example, if copper is used as the conductor element material. The affixing of the two conductor elements 5 then takes place with materials which are mechanically stable but have poorer electrical conductivity, such as steel.

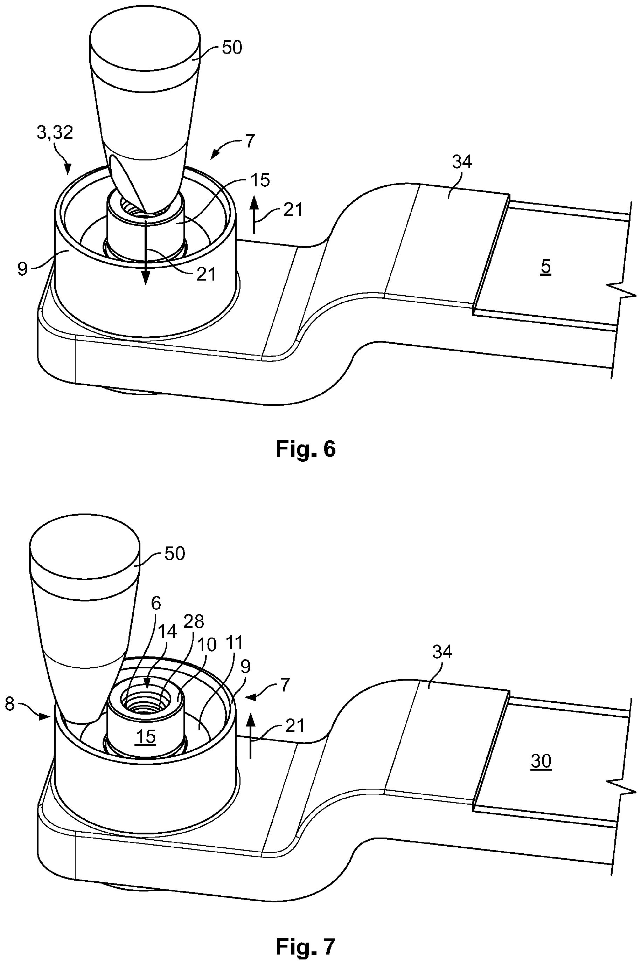

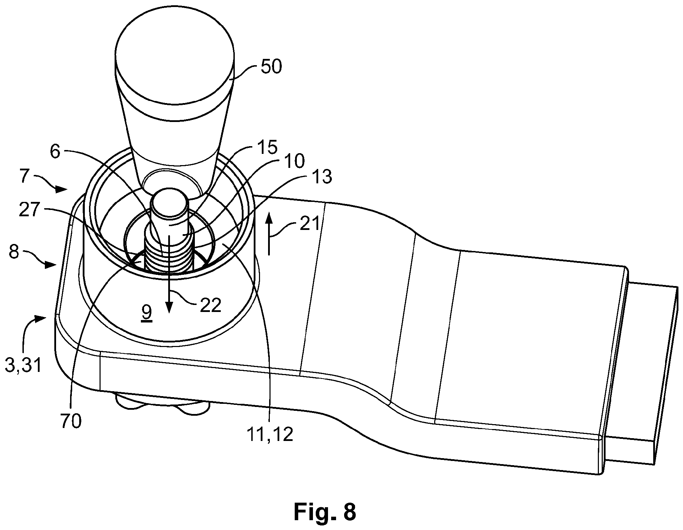

Figures 6, 7 and 8 show how the protection works. By virtue of the cap 15, a test finger 50 cannot encroach on elements of the screw 17 which are to be conducted. Furthermore, by virtue of the spacing along the connection direction 21, contact with the current bridge 11 is also not possible since the test finger 50 cannot enter sufficiently far between the collar 9 and the protection pin 10.

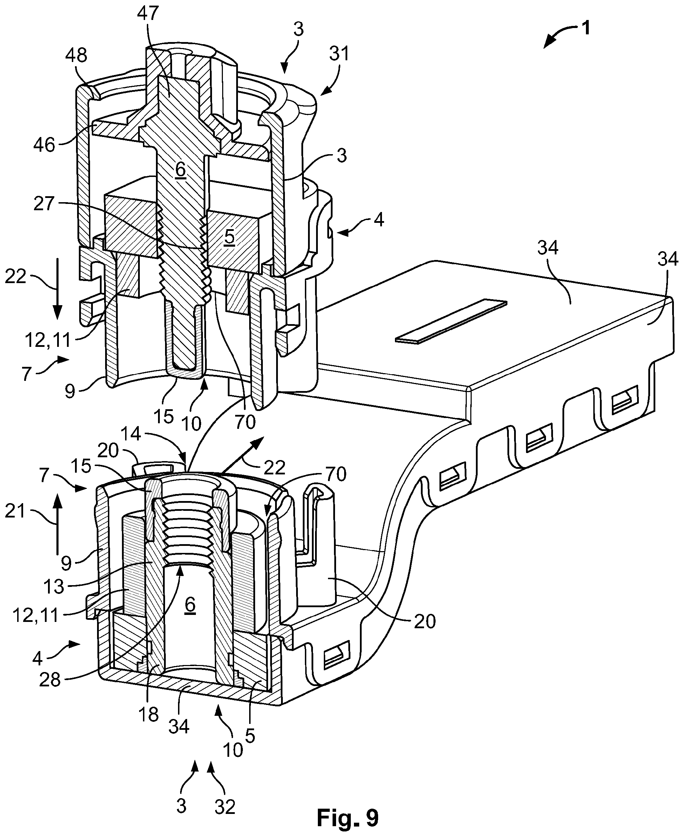

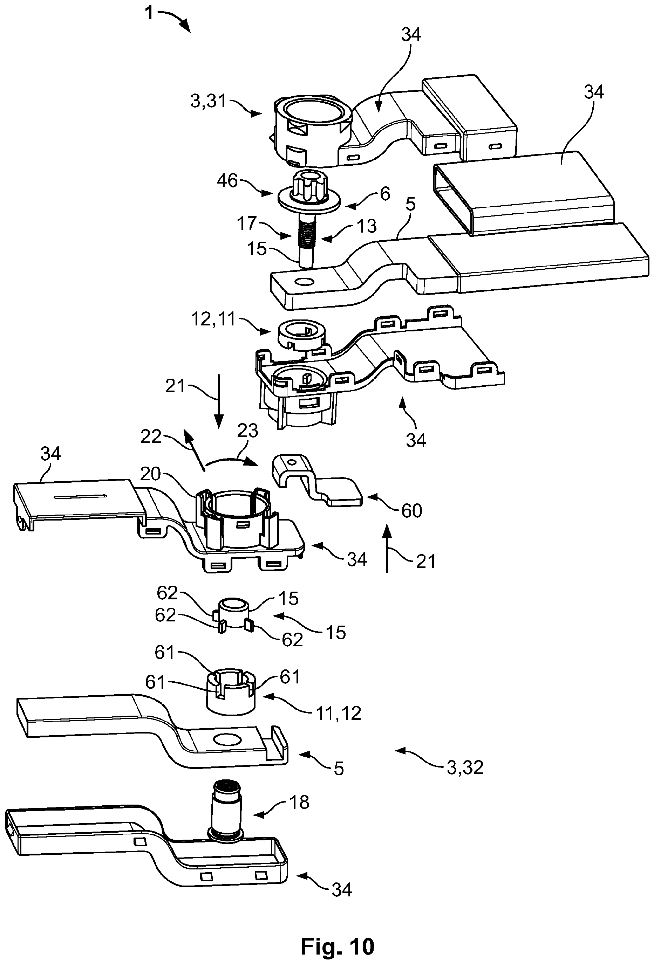

Figures 9 and 10 show a second embodiment of a module connector 1. For the sake of brevity, the features already explained with reference to the first embodiment will not be discussed again.

In contrast to the first embodiment, the stop 48 is located further outside, such that the affixing element 6 of the first connection part 3, 31 has a degree of play along the connection direction 21. The two connection parts 3, 31, 32 are firstly connected to one another and an electrical connection can be produced via the current bridge 11 before the affixing elements 6 are screwed onto one another.

Furthermore, the two current bridges 11 are different lengths along the connection direction 21. The current bridge 11 at the first connection part 3, 31 is shorter and is located further inside the connection part 3, 31 along the connection direction 21. This is advantageous since, at the first connection part 3, 31, the gap between the collar 9 and the protection pin 10 is greater than at the second connection part 3, 32, since a screw is used at the first connection part 3, 31, this screw being screwed into the wider nut 18 at the second connection part 3, 32.

Moreover, coding 20 is present, which enables the two connection parts 3, 31, 32 to be connected only in four angular positions which differ by 90° rotation about the connection direction 21. As a result, a secure positioning is enabled.

It can further be seen in Fig. 10 that the current bridge 11 of the second connection part 3, 32 has retaining elements 61 in the form of recesses, which cooperate with retaining elements 62 on the caps 15. As a result, secure positioning is enabled.

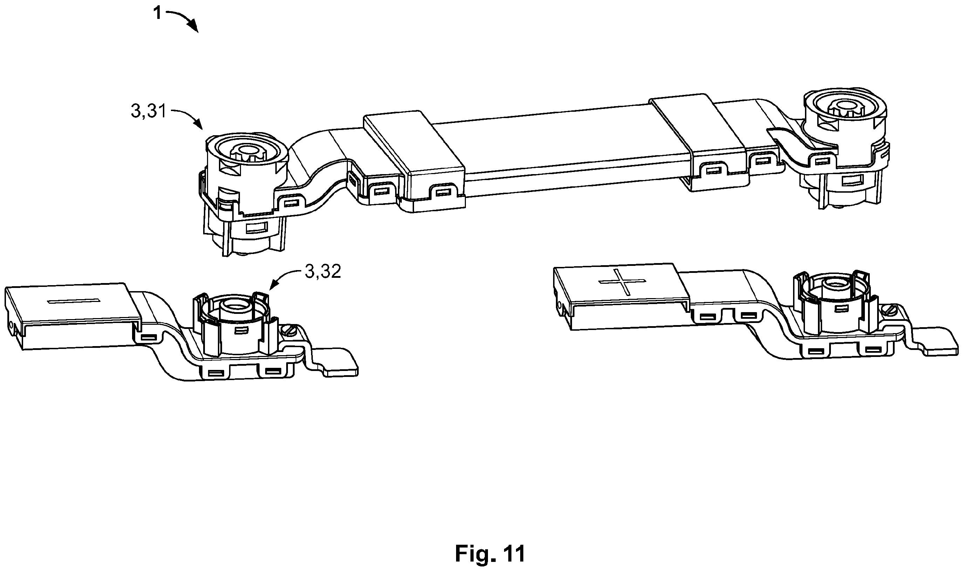

Furthermore, Figures 11 and 12 show the use of a module connector 1. It should be recognised that, by virtue of the coding 20, a vertical arrangement is possible in a secure manner.

### Reference numbers

- 1: Module connector
- 2: Battery
- 3: Connection part
- 4: Conductor point
- 5: Conductor element
- 6: Affixing element
- 7: Connection side
- 8: Touch protection
- 9: Collar
- 10: Protection pin
- 11: Current bridge
- 12: Contact sleeve
- 13: Peak
- 14: Receptacle
- 15: Cap
- 16: Screw connection
- 17: Screw
- 18: Nut
- 20: Coding
- 21: Connection direction
- 22: Radial direction
- 23: Circumferential direction
- 27: External thread
- 28: Internal thread
- 30: Conductor braid
- 31: First connection part
- 32: Second connection part
- 33: Compacted end
- 34: Insulation
- 44: Coating
- 46: Flange
- 47: Head
- 48: Stop
- 50: Test finger
- 60: Retaining element
- 61: Retaining element
- 62: Retaining element
- 70: Receptacle

## Claims

1. A module connector (1), in particular for batteries (2) of vehicles with an electric drive, with two connection parts (3, 31, 32) which can be connected to one another in an electrically conductive manner and to each of which a conductor element (5) can be attached at a conductor point (4), and which each have a mutually compatible affixing element (6), wherein each connection part (3, 31, 32), at its connection side (7) oriented towards the respective other connection part (3, 31, 32), is provided with a touch protection (8) having an outer, electrically insulated collar (9) and an electrically insulated protection pin (10) which is surrounded by the collar, wherein a current bridge (11) which electrically connects the two conductor points (4) and which the collar (9) and protection pin (10) project beyond is located at at least one connection part (3, 31, 32) between the collar (9) and protection pin (10), **characterized in that** the protection pins (10) are formed by the peaks (13) of the affixing elements (6).

2. The module connector (1) according to Claim 1, wherein the protection pin (10) projects beyond the collar (9).

3. The module connector (1) according to Claim 1 or 2, wherein the current bridge (11) is configured as a contact sleeve (12).

4. The module connector (1) according to Claim 3, wherein each connection part (3, 31, 32) has its own contact sleeve (12).

5. The module connector (1) according to any one of Claims 1 to 4, wherein one protection pin (10) has a central receptacle (14) for the other protection pin (10).

6. The module connector (1) according to any one of Claims 1 to 5, wherein a protection pin (10) has an electrically insulating cap (15) at the connection side (7).

7. The module connector (1) according to any one of Claims 1 to 6, wherein the collar (9) and/or the current bridge (11) are rotationally symmetrical.

8. The module connector (1) according to any one of Claims 1 to 7, wherein the affixing elements (6) are arranged at least partially inside the current bridge (11).

9. The module connector (1) according to any one of Claims 1 to 8, wherein the affixing elements (6) can be connected to one another via a screw connection (16).

10. The module connector (1) according to any one of Claims 1 to 9, wherein an affixing element (6) is configured as a screw (17) and a flange (46) protrudes laterally from a head (47) of the screw (17), said flange (46) being retained by a stop (48) at the connection part (3, 31).

11. The module connector (1) according to any one of Claims 1 to 10, wherein the connection parts (3, 31, 32) have a coding (20) which enables the connection only in specific angular positions with respect to a rotation about a connection direction (21).

12. The module connector (1) according to any one of Claims 1 to 11, wherein at least one connection part (3, 31, 32) comprises a conductor braid (30) with a compacted end (33).

13. The module connector (1) according to any one of Claims 1 to 12, wherein a receptacle (70) for the collar (9) of the other connection part (3, 31) is present at a connection part (3, 32) between the current bridge (11) and the collar (9).

14. The module connector (1) according to any one of Claims 1 to 13, wherein a receptacle (70) for the affixing element (6) of the other connection part (3, 32) is present at a connection part (3, 31) between the protection pin (10) and the current bridge (11).

## Patentansprüche

1. Modul-Verbinder (1), insbesondere für Batterien (2) von Fahrzeugen mit einem elektrischem Antrieb, mit zwei Verbindungsteilen (3, 31, 32), die elektrisch leitend miteinander verbunden werden können und an denen jeweils ein Leiterelement (5) an einem Leiter-Punkt (4) angebracht werden kann, und die jeweils ein wechselseitig kompatibles Befestigungselement (6) aufweisen, wobei jedes Verbindungsteil (3, 31, 32) an seiner zu dem jeweiligen anderen Verbindungsteil (3, 31, 32) hin ausgerichteten Verbindungseite (7) mit einem Berührungsschutz (8) versehen ist, der eine äußere, elektrisch isolierte Manschette (9) und einen elektrisch isolierten Schutzstift (10) aufweist, der von der Manschette umgeben ist, wobei eine Strombrücke (11), die die beiden Leiter-Punkte (4) elektrisch verbindet und über die die Manschette (9) und der Schutzstift (10) hinaus vorstehen, an wenigstens einem Verbindungsteil (3, 31, 32) zwischen der Manschette (9) und dem Schutzstift (10) angeordnet ist, **dadurch gekennzeichnet, dass** die Schutzstifte (10) durch die Spitzen (13) der Befestigungselemente (6) gebildet werden.

2. Modul-Verbinder (1) nach Anspruch 1, wobei der Schutzstift (10) über die Manschette (9) hinaus vorsteht.

3. Modul-Verbinder (1) nach Anspruch 1 oder 2, wobei die Strombrücke (11) als eine Kontakthülse (12) ausgeführt ist.

4. Modul-Verbinder (1) nach Anspruch 3, wobei jedes Verbindungsteil (3, 31, 32) seine eigene Kontakthülse (12) aufweist.

5. Modul-Verbinder (1) nach einem der Ansprüche 1 bis 4, wobei ein Schutzstift (10) eine mittige Aufnahme (14) für den anderen Schutzstift (10) aufweist.

6. Modul-Verbinder (1) nach einem der Ansprüche 1 bis 5, wobei ein Schutzstift (10) eine elektrisch isolierende Kappe (15) an der Verbindungs-Seite (7) aufweist.

7. Modul-Verbinder (1) nach einem der Ansprüche 1 bis 6, wobei die Manschette (9) und/oder die Strombrücke (11) rotationssymmetrisch sind/ist.

8. Modul-Verbinder (1) nach einem der Ansprüche 1 bis 7, wobei die Befestigungselemente (6) wenigstens teilweise im Inneren der Strombrücke (11) angeordnet sind.

9. Modul-Verbinder (1) nach einem der Ansprüche 1-8, wobei die Befestigungselemente (6) über eine Schraubverbindung (16) miteinander verbunden werden können.

10. Modul-Verbinder (1) nach einem der Ansprüche 1 bis 9, wobei ein Befestigungselement (6) als eine Schraube (17) ausgeführt ist und ein Flansch (46) seitlich von einem Kopf (47) der Schraube (17) vorsteht und der Flansch (46) durch einen Anschlag (48) an dem Verbindungsteil (3, 31) gehalten wird.

11. Modul-Verbinder (1) nach einem der Ansprüche 1 bis 10, wobei die Verbindungsteile (3, 31, 32) eine Kodierung (20) aufweisen, die die Verbindung nur in bestimmten Winkelpositionen in Bezug auf eine Drehung um eine Verbindungsrichtung (21) herum ermöglicht.

12. Modul-Verbinder (1) nach einem der Ansprüche 1 bis 11, wobei wenigstens ein Verbindungsteil (3, 31, 32) ein Leitergeflecht (30) mit einem verdichteten Ende (33) umfasst.

13. Modul-Verbinder (1) nach einem der Ansprüche 1 bis 12, wobei eine Aufnahme (70) für die Manschette (9) des anderen Verbindungsteils (3, 31) an einem Verbindungsteil (3, 32) zwischen der Strombrücke (11) und der Manschette (9) vorhanden ist.

14. Modul-Verbinder (1) nach einem der Ansprüche 1 bis 13, wobei eine Aufnahme (70) für das Befestigungselement (6) des anderen Verbindungsteils (3, 32) an einem Verbindungsteil (3, 31) zwischen dem Schutzstift (10) und der Strombrücke (9) vorhanden ist.

## Revendications

1. Connecteur de module (1), en particulier pour des batteries (2) de véhicules à entraînement électrique, avec deux parties de connexion (3, 31, 32) qui peuvent être connectées entre elles de manière électroconductrice et à chacune desquelles un élément conducteur (5) peut être attaché à un point conducteur (4), et comportant chacune un élément de fixation mutuellement compatible (6), dans lequel chaque partie de connexion (3, 31, 32), à son côté connexion (7) orienté vers l'autre partie de connexion respective (3, 31, 32), est pourvue d'une protection contre les contacts accidentels (8) comportant un collier externe isolé électriquement (9) et une broche de protection isolée électriquement (10) qui est entourée par le collier, dans lequel un pont de courant (11) qui connecte électriquement les deux points conducteurs (4) et au-delà duquel le collier (9) et la broche de protection (10) se projettent est situé sur au moins une partie de connexion (3, 31, 32) entre le collier (9) et la broche de protection (10), **caractérisé en ce que** les broches de protection (10) sont formées par les pointes (13) des éléments de fixation (6).

2. Connecteur de module (1) selon la revendication 1, dans lequel la broche de protection (10) se projette au-delà du collier (9).

3. Connecteur de module (1) selon la revendication 1 ou 2, dans lequel le pont de courant (11) est configuré comme un manchon de contact (12).

4. Connecteur de module (1) selon la revendication 3, dans lequel chaque partie de connexion (3, 31, 32) comporte son propre manchon de contact (12).

5. Connecteur de module (1) selon l'une quelconque des revendications 1 à 4, dans lequel une broche de protection (10) comporte un réceptable central (14) pour l'autre broche de protection (10).

6. Connecteur de module (1) selon l'une quelconque des revendications 1 à 5, dans lequel une broche de protection (10) comporte un capuchon électriquement isolant (15) du côté connexion (7).

7. Connecteur de module (1) selon l'une quelconque des revendications 1 à 6, dans lequel le collier (9) et/ou le pont de courant (11) sont symétriques en rotation.

8. Connecteur de module (1) selon l'une quelconque des revendications 1 à 7, dans lequel les éléments de fixation (6) sont agencés au moins partiellement à l'intérieur du pont de courant (11).

9. Connecteur de module (1) selon l'une quelconque des revendications 1 à 8, dans lequel les éléments de fixation (6) peuvent être connectés entre eux via une connexion vissée (16).

10. Connecteur de module (1) selon l'une quelconque des revendications 1 à 9, dans lequel un élément de fixation (6) est configuré comme une vis (17) et une bride (46) ressort latéralement de la tête (47) de la vis (17), ladite bride (46) étant retenue par une butée (48) sur la partie de connexion (3, 31).

11. Connecteur de module (1) selon l'une quelconque des revendications 1 à 10, dans lequel les parties de connexion (3, 31, 32) comportent un codage (20) qui permet une connexion uniquement à des positions angulaires spécifiques d'une rotation autour d'une direction de connexion (21).

12. Connecteur de module (1) selon l'une quelconque des revendications 1 à 11, dans lequel au moins une partie de connexion (3, 31, 32) comprend une tresse conductrice (30) avec une extrémité compactée (33).

13. Connecteur de module (1) selon l'une quelconque des revendications 1 à 12, dans lequel un réceptable (70) pour le collier (9) de l'autre partie de connexion (3, 31) est présent sur une partie de connexion (3, 32) entre le pont de courant (11) et le collier (9).

14. Connecteur de module (1) selon l'une quelconque des revendications 1 à 13, dans lequel un réceptable (70) pour l'élément de fixation (6) de l'autre partie de connexion (3, 32) est présent sur une partie de connexion (3, 31) entre la broche de protection (10) et le pont de courant (11) .
